# EUROPEAN PATENT SPECIFICATION

(11) **EP 2 359 035 B1**
(45) Date of publication and mention of the grant of the patent: **12.02.2014**
(21) Application number: 09796047.0
(22) Date of filing: 18.12.2009
(51) Int. Cl.: F16J 15/10, F16J 15/14

(54) **IMPROVED SEALANT STRIP AND METHOD OF FORMING LAP JOINTS**
"
BANDE D'ÉTANCHÉITÉ AMÉLIORÉE ET PROCÉDÉ DE RÉALISATION DE JOINTS À RECOUVREMENT

(30) Priority: 18.12.2008 GB 0823063; 22.07.2009 GB 0912750
(43) Date of publication of application: 24.08.2011
(73) Proprietor: Bostik SA, 92400 Courbevoie (FR)
(72) Inventor: LAVERY, Michael, Staffordshire ST17 0HJ (GB); BERRY, Keith, Staffordshire ST16 3BY (GB)
(74) Representative: Houghton, Mark Phillip
(86) International application number: PCT/GB2009/051743
(87) International publication number: WO 2010/070356

(56) References cited:
- FR-A1- 2 369 472
- GB-A- 1 541 482
- GB-A- 1 567 199
- US-A- 4 759 962
- US-A- 6 089 576
- US-A1- 2004 041 356

## Description

The present invention a relates to an improved lap joint using a sealant strip, methods of forming such joints and an improved sealant strip for use in such joints. In particular, an improved lap joint utilising a non-setting sealant strip comprising an elongate rubber cord is provided.

When sealing joints, such as between sheets of material it is known to use a sealant tape comprising a curable sealant composition which adheres to the material and serves to form a resilient and water tight joint. Sheets of material are commonly joined by use of a lap-joint. Such joints are widely used in automotive construction, particularly where sheets of metal are to be joined. A thin layer of sealant is placed between metal sheets, in proximity to a mutual edge and then one sheet lapped over another along those adjacent mutual edges and placed under compression to form a sealed lap joint. In these circumstances it is a known problem that the sealant can extrude from the joint before curing and hence the sealant cannot effectively perform its function. This situation is exacerbated when a non-setting, mastic, sealant strip is used as the deformation of a joint due to thermal and mechanical effects can give rise to complete degradation of a joint over time, particularly when it is required that a water tight seal is to be maintained.

A known solution to this problem is the provision of offsetting elements, such as shims, which are included in the sealant and have a width equal to the desired joint thickness, so that when a joint is formed under compression the mastic is not further extruded once the material sheets being joined abut the shims, which serve to define the offset of the material of one part of the joint from the material of another part.

GB 1541482 discloses the use of compression resistant elements in the form of a compression resistant wire of 1mm diameter and below in a shortest axis as offsetting elements. The compression resistant elements are laid along their long axis on a strip of sealant tape.

US 4759962 discloses the use of substantially incompressible spacer materials which serve as offsetting particles and are in the thickness range of 0.6 to 0.1 mm. It is made an essential requirement that the substantially incompressible spheroidal spacer materials are not substantially compressed when employed in sealing joints.

In automated automotive production applications, particularly the mass-produced production of cars, the use of incompressible spacer materials have been found to be preferable as it is possible to compress joints at a pressure such that the materials being joined, such as metal sheets, engage with the high points of the incompressible spacer material so as to locally deform the metal sheet and therefore lock the joint. Furthermore, in such applications as automotive manufacture using metal sheet the size of the incompressible spacer materials are in the order of 0.5 mm or below in diameter and the lap joints are in the order of 20 times this size in width. Therefore the particles, even if not locked by local deformation, have an effectively large distance to travel to be self extruded from a joint.

However, a range of other applications of sealants, such as in the form of a pre-formed tape, to seal joints, for example in the construction of buildings, mobile-homes and caravans are known and in which it has not been possible to successfully incorporate offsetting elements into the sealant directly to facilitate modem and efficient production techniques. A characteristic of these applications are that effectively large gaps that have to be filled. Gaps of from 2 to 5 mm between sheets in joints are normally present and lap joints are fixed at intervals by means of individual fasteners, such as, screws, rivets and bolts. The joints are required to provide a water tight seal and, in automated automotive production wide tolerances and a general lack of precision in assembly is normal.

There is therefore a requirement to provide an improved means for sealing lap joints used in manual construction of relatively large gaps, in the order of several millimetres, so as to provide a durable water tight seal. Both a method of providing such a joint and an improved sealant strip would be beneficial.

There is also a requirement to provide a form of non-setting mastic, particularly in strip or tape form, for joint filling and sealing that is resistant to extrusion, particularly when the joint is secured by means of discrete fasteners, such as screws.

The present invention provides a lap joint for providing a water-tight seal between 2 sheets of material, the joint comprising:
i) the first and second sheets of material of the joint, wherein the first and second sheets of material overlap each other, adjacent an edge of each sheet;
ii) a sealant strip of width up to the width of material overlap of the first and second sheets where in the sealant strip on a first face abuts the first sheet and on a second face abuts the second sheet; wherein
iii) the joint is held together by a plurality of fasteners which penetrate the first and second sheets of material such as to compress, or hold compressed, the first and second sheets of material about the sealant strip; and characterised in that
iv) the sealant strip comprises along its length one or more elongate elastomeric cords embedded in a sealant composition, and
when a single cord is present fasteners are placed through the sealant strip on either side of the cord and that when a plurality of cords are present there are an even number of cords and that fasteners are placed between the cords.

The invention relates to joining sheets of material, however, thin sheets of preferably flexible in the order of 0.2 to 5mm, preferably 0.3 to 3mm, most preferably 0.3 to 1.5mm thick are preferred. The invention also extend to where a sheet is joined but the sheet is attached to a more rigid feature remote from the sheet portion being joined, such as a moulded window surround, chassis component, door frame or glass panel. Such components are generally in the form of (for example folded) thin sections (c.f. rectangular tube, L-section beading) and are considered to fall within the scope of the definition of sheet in the broadest understanding of the present invention.

The sealant strip is preferably a pre-formed sealant strip, such as a strip extruded on to a release tape and wound into a reel for subsequent placement on a first face of one sheet, removal of the release tape and placement of a second sheet on the then exposed other, second, face of the tape, so as to form a joint.

The sealant strip may comprise a non-setting composition. A non-setting composition is a composition which does not substantially change its physical properties over time, this is in contrast to a setting or curing composition which, such as on exposure to air or moisture, undergoes physical changes by means of a chemical action to form a consolidated mass of material. A non-setting composition is advantageous in that repair of a structure is facilitated as the joint can be non-destructively opened again later and, in addition, some redistribution of sealant material can occur after joint construction to accommodate imperfections in construction typical of situations where manual assembly is used (such as using hand tools) and also to maintain a seal after, for example collision induced, distortion of a joint.

The sealant strip may be capable of adhering to the first and second sheets of material. This gives an additional means of a sealing beyond that simply due to physical compression.

The sealant strip in which the elastomeric cord is embedded may be of the same thickness as the elastomeric cord, preferably before use but optionally as a result of incorporation into a joint. This enables easy visual confirmation of the continuity of the cord. Further, direct contact between the cord and the surfaces to be sealed is provided so that the sealing from the cord and any sealing from the sealant composition act independently to provide a more secure seal.

The sealant strip may comprise elastomeric cord that is cylindrical. This provides ease of placement of the cord in the composition as it is not sensitive to orientation of the cord. Furthermore a cylindrical cord has been found to act in the manner of seal by providing point of contact that are small (tangential) and hence the pressure exerted by the fastener is higher per unit area and a better seal results.

In the sealant strip the elastomeric cord may traverse substantially the whole length of the sealant strip, such as a pre-formed sealant strip. This provides a continuous seal along the whole length of the sealant strip.

Elastomers have a very large range of deformation available before break and hence imperfections, such as a variation in thickness of the joint are readily accommodated by an elastomeric cord, whilst the construction of the joint of the present invention means that the cord is not easily expelled as the natural result of the joint reacting to release stress in the cord. The elastomeric cord may comprise a natural or synthetic rubber, a natural rubber is preferred as this is less likely to be distorted by organic solvents or plasticisers, such as may be used in the formation of a mastic.

The sealant composition in which the elastomeric cord is present is preferably a non-setting sealant. A non-setting sealant is a sealant that does not substantially harden over time such that it remains substantially pliable throughout the normal lifetime of the joint. An example of a non-setting sealant is a putty comprised of natural rubber or butadiene rubber particles in combination with a plasticiser oil. A suitable material for use as a sealant composition is available as Prestik® 6000 as supplied by Bostik UK. The use of a non-setting sealant is preferred as this allows distortion of the joint to be accommodated over time as sealant may to some extent be distribute itself provided that it is retained within the joint, as allowed for by the use of the offsetting cord and fasteners of the present invention. The preferred form of non-setting sealant is a sealant that has a viscosity such that the sealant does not flow unaided and requires external pressure, such as present during extrusion, to cause flow.

The first and second face of the sealant strip are preferably parallel. This allows for easy placement of the strip and an extended area about which the water tight seal may take place. The sealant strip is preferably rectangular in cross section with a length at least 10 times the width of the strip and a width at least twice the thickness of the strip, more preferably 5 times the thickness of the strip. This enables it to be easily produced by a co-extrusion process with the cord.

The term cord, for the purposes of the present invention, is an elongate strip of material. The elongate strip is preferably symmetrical and most preferably in the form of an elongate cylinder or rectangle (parallelepiped), preferably a rectangle. The elongate strip is preferably from 1mm or greater than 1mm to 5 mm in thickness (i.e. in diameter is circular), more preferably from 1.5 mm or 2 mm to 5 mm in thickness, most preferably from 3 mm to 4 mm in thickness (which provides for easy manual placement).

The term elastomeric means that the object has properties that are akin to that of a rubber, such as vulcanised natural rubber. The elastomer may be a thermoset or thermoplastic. A thermoplastic is preferred. Suitable rubbers include acrylic rubber butadiene rubber, butyl rubber chlorobutyl, chlorinated polyethylene, chlorosulphonated polyethylene, epichlorhydrin ethylene acrylic, ethylene propylene rubber, fluoroelastomers, hydrogenated nitrile rubber, isoprene rubber, natural rubber, nitrile rubber, perfluoro elastomers, polychloroprene, polynorbornene rubber, polysulphide rubber, polyurethane rubber, silicone (and fluorosilicone) rubber, styrene butadiene rubber, tetra-flouroethylene/propylene., Nitrile rubber is preferred for its oil resistance.

The elastomer may be defined by means of the Young's modulus of the object which is preferably between 0.1 GPa and 15 GPa, more preferably between 0.2 GPa and 10 GPa, most preferably between 0.2 and 7 GPa, even more preferably 0.3 to 0.8 GPa these selections progressively giving reduced expulsion from a joint under compression whilst still providing an offsetting function. Natural rubber is an example of a suitable elastomer with styrene butadiene rubber a material best conforming to the overall physical requirements.

The present invention also encompasses a method of constructing a lap joint. The method of constructing the lap joint for providing a water-tight seal between 2 sheets of material, the method comprising the steps:
i) overlapping a first and second sheet of material of the joint, wherein the first and second sheets of material overlap adjacent an edge of each sheet;
ii) placing a sealant strip of width up to the width of material overlap of the first and second sheets on a first face of the first sheet so as to abut the first sheet and on a second face of the second sheet so as to abut the second sheet; wherein
placing a plurality of fasteners through the first and second sheet in the region of overlap such that the fastener penetrates the sealant strip and serves to compress, or hold compressed, the first and second sheets of material about the sealant strip; and the sealant strip comprises along its length one or more elastomeric cords embedded in a sealant composition wherein when a single cord is present fasteners are placed through the sealant strip on either side of the cord and that when a plurality of cords are present there are an even number of cords and that fasteners are placed between the cords.

The sealant strip used in the method of the present invention may have one or more of the attributes of sealing strips considered elsewhere in this document.

The present invention in its various aspects will now be illustrated by means of the following diagrams, in which:
Figure 1 shows a known lap joint for sheet materials which are joined by means of a fastener and sealed by means of a non-setting sealant;
Figure 1A shows the effects of non-setting sealant extrusion over time in a lap joint as illustrated in figure 1;
Figure 2 shows cross sections across the width of elongate strips of non-setting sealant, 2B) and 2C) being of the present invention;
Figure 3 shows a non-preferred joint construction using a non-setting sealant strip comprising an elongate rubber cord;
Figure 4 shows a preferred joint construction of the present invention comprising a non-setting sealant strip comprising an elongate rubber cord wherein the joint comprises fasteners placed either side of a central cord; and
Figure 5 shows a further preferred joint construction of the present invention comprising a non-setting sealant strip comprising a plurality of elongate rubber cords werein the joint comprises a series of single fasteners placed through the sealant strip between elongate rubber cords.

All the figures show a width-wise cross-section of a lap joint, such as a lap joint between large sheets of flat material which are brought together to overlap along a common edge. Hence, in practice, sheet 10 of material will extend far to the left of the diagram and sheet 20 of material will extend far to the right of the diagram. The strips of non-setting sealant would extend into and out of the plane of the paper and the fasteners 30 would typically be present as a multiplicity of, usually equidistantly, spaced units spaced apart going into and out of the plane of the paper.

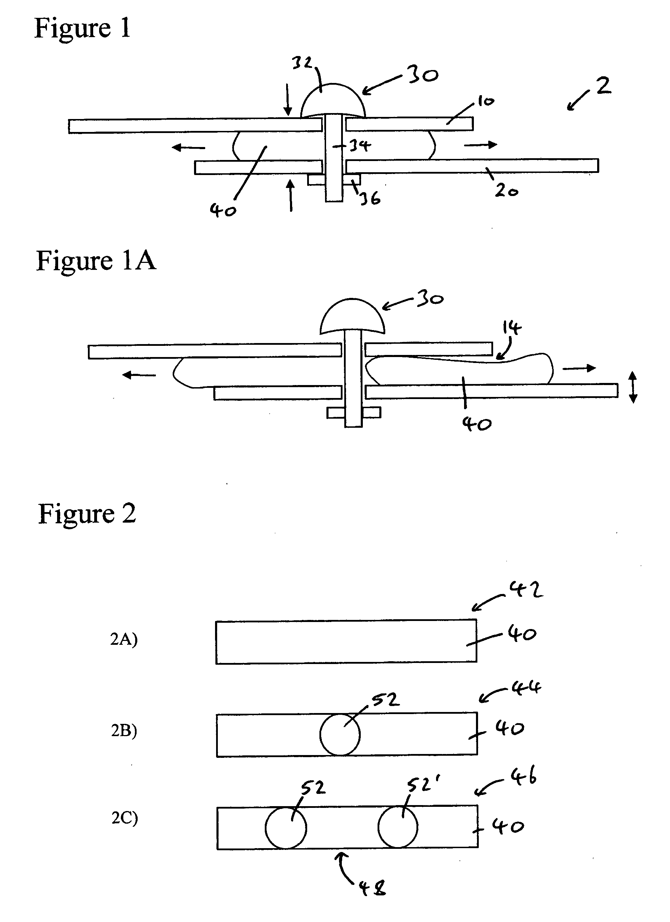

Figure 1 shows a known lap joint 2 secured by a fastener 30. The lap joint 2 comprises an upper sheet 10 of material and a lower sheet 20 of material, in this case the two materials are the same, such as aluminium sheet from 0.3 to 1.5mm thickness. The two sheets overlap to form a lap joint 2, which in this instance is held together by means of a fastener 30. The fastener 30 comprises a head 32 a shaft 34 and a nut 36 engaged on a screw thread of the shaft such that the fastener 30 may be tightened so as to bring together sheets 10 and 20 so as to secure the joint and to stop lateral movement of the joint 2. The fastener 30 will preferably be a self tapping screw or a compression rivet but this is not shown for ease of illustration. The lap joint of figure 1 provides a means of securing two sheets of material 10, 20 to form a water tight seal by means of sealant 40.

The known lap joint of figure 1, particularly wherein the sealant 40 is a non-setting sealant will, over time, extrude sealant 40, this is shown in figure 1A. The sealant self extrudes from the space between the sheets 10, 20 by the action of mechanical movement of the sheets, temperature changes and creep of the sealant. This eventually leads to a breakdown of the sealant function and a reduction in tension of the fastener 30 such that the joint is no longer effective either mechanically (as illustrated by the double headed arrow) or against water ingress 14. As illustrated, the sealant 40, exits from the overlap in the sheet material 10, 20 and so is more exposed, since non-setting sealants are intrinsically tacky this gives rise to unwanted adhesion to additional materials, such as dirt. The extrusion of the sealant 40, also means that the water seal between the sheets 10, 20 is often lost and that the thickness of the sealant reduces both leaving the fastener 30 to be loose in the joint, which gives rise to mechanical wear and tear, enlargement of apertures through the sheets 10, 20 for the fastener 30 to pass and a further mechanical degradation of the joint.

Figure 2 shows a cross-section of sealant strips, the long axis of the strip being in and out of the plane of the paper.

Figure 2A shows a known conventional sealant strip 42, for example of a non-setting mastic 40.

Figure 2B shows the sealant strip 44 suitable for use in the present invention incorporating a single rubber cord 52 effectively central to the width of the non-setting mastic 40 of the sealant strip.

Figure 2C shows a sealant strip 46 of the present invention incorporating two rubber cords 52, 52' effectively equidistant from the centre of the width of the non-setting mastic 40 of the sealant strip.

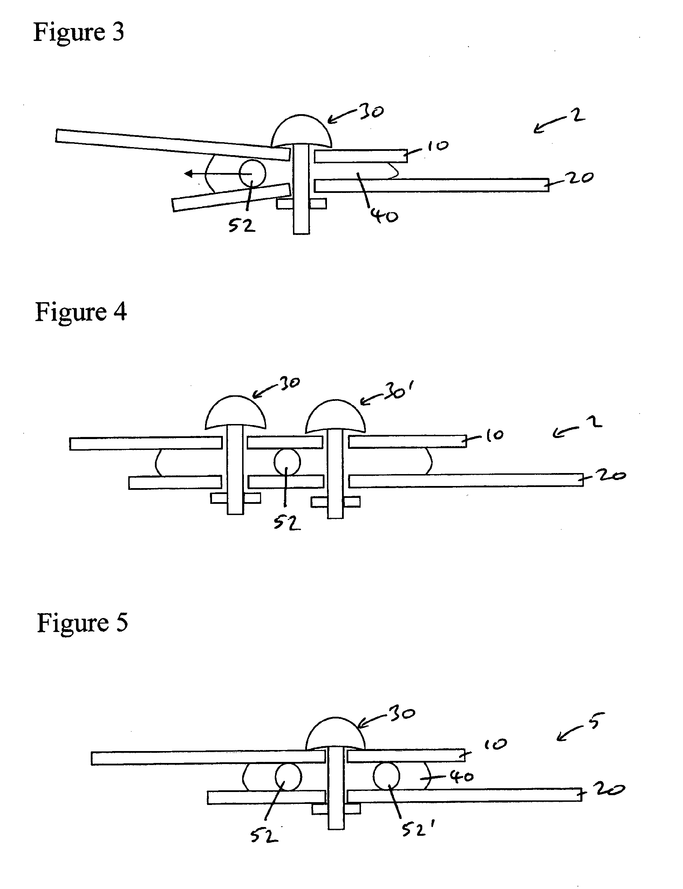

Figure 3 shows the use of a non-setting mastic comprising a single rubber cord 52 in a lap joint secured by a fastener 30, of the type illustrated in figure 2B. The use of such a sealant strip in the arrangement illustrated is non-optimal as the cord acts as a fulcrum to lever open the joint wherein mastic can extrude and the cord itself is expelled from the joint. This may occur on construction of the joint 2 due to a compressive effect from fastener 30, or over time, due to movement and distortion of the joint 2. Given that the cord extends substantially the full length of the sealant strip this gives rise to loops of cord extending from the joint. Portions of the joint are therefore not properly sealed, the fastener is no longer in tension bringing the sheets 10, 20 into compression the joint becomes loose and joint integrity, particularly against water ingress, is lost. These loops can be easily caught, or deliberately pulled, causing further destruction to the joint and act as water gathering channels into a defective joint. Figure 3 therefore shows a non-preferred arrangement.

Figure 4 shows a preferred use of a non-setting mastic sealing strip comprising a single rubber cord 52 in a lap joint secured by a fastener 30. The use of such a sealant strip in this arrangement is preferred as the combination of fasteners 30 and 30' serve to retain the rubber-cord 52 central to the sealant strip and the fulcrum effect of the cord 52 acts to enlarge the centre of the joint and bring together the material 10, 20 outside of the joint by means of a leverage about the fulcrum 52. Hence, an improved joint with greater integrity, and ability to stop a sealant 40 from extruding whilst having an additional continuous seal caused by cord 52 is formed. This improved joint of the present invention provides a greater physical integrity, longer life, better water resistance, and ease of manufacture; than at least the joints shown in figures 1 or 3.

The method of construction of the joint of the invention comprises providing a first material 10, preferably in sheet form and a second material 20, also preferably in sheet form, placing a sealant strip onto the surface of first material 10 in a region to be joined, placing the second sheet of material 20 in contact with the sealant strip in a region of the second material 20 that is to be joined with first material 10. The joint is then secured by means of a plurality of fasteners 30, 30' placed on either side of the cord 52 through the sealant strip so as to retain the cord 52 in compression. The placement of the fasteners 30, 30' can be staggered such that moving along the length of the sealant strip a first fastener is placed on the left of the strip, a second fastener on the right a third on the left and so forth. In this situation it is preferred that the separation between the fasteners is no more than about 5 times, preferably 2 times the width of the joint.

Figure 5 shows a preferred use of a non-setting mastic sealant strip of the present invention comprising an even number of rubber cords 52, 52', in this case two rubber cords 52, 52' located symmetrically about a notional centre line of the sealant strip. This sealant strip of the present invention and the method of use of the present invention provides an improved joint of greater physical integrity, durability, ease and economy of manufacture, and enhanced water resistance. The joint 5 comprises sheet material 10, 20 to be joined, a fastener 30 bringing the sheet material 10, 20 into compression across a sealant strip which comprises sealant 40 and rubber cords 52, 52'. The rubber cords act to provide a double sealing arrangement whilst requiring only one fastener per unit length of the sealant strip to compress the cords so as to form the joint. By providing two fulcrums to act against the compression on the fastener 30 the effective leverage on the sheet material for practical purposes is limited and the opening of the joint due to a leverage effect is minimal.

A method of construction of this joint of the invention comprises providing a first material 10, preferably in sheet form, and a second material 20, also preferably in sheet form, placing a sealant strip (46) on to the surface of first material 10 in a region to be joined placing the second sheet of material 20 in contact with the sealant strip in a region of the second material 20 that is to be joined with first material 10. The joint is then secured by means of a plurality of fasteners 30 placed effectively along a notional centre line of the sealant strip bisecting between the cords 52, 52' through the sealant strip so as to retain the cords 52, 52' in compression. In this method it is preferred that the separation between the cords 52, 52' is no more than 10, more preferably no more than 4 times the diameter of each cord. This figure can be greater if the head 32 of the fastener 30 is large, such as more than two cord diameters in width. When this form of the joint is constructed an even Number of cords in the sealant strip are preferred. The preferred number of cords is 2 but the use of 4 or 6 cords is contemplated.

In the absence of information to the contrary all values and measurements referred to in the present application are as measured or determined at 20°C.

## Claims

1. A lap joint for providing a water-tight seal between two sheets of material, the joint comprising:
i) a first sheet (10) and a second sheet (20) of material, wherein the first and the second sheets of material overlap each other at adjacent edges of each sheet;
ii) a non-setting, pliable sealant strip of width up to the width of material overlap of the first and second sheets, and the permanently pliable sealant strip (42, 44) on a first face abuts the first sheet and on a second face abuts the second sheet; wherein
iii) the joint is held together by a plurality of fasteners (30) which penetrate the first and second sheets of material such as to compress, or hold compressed, the first and second sheets of material about the permanently pliable sealant strip; wherein
iv) the permanently plastic or pliable sealant strip (42, 44) comprises along its length at least one cord (52) embedded therein; and wherein the at least one cord is of the same thickness as the permanently pliable sealant strip and the at least one cord is in direct contact with the first and second sheets of material respectively; and **characterised in that**
the at least one cord is an elastomeric cord (52).

2. The lap joint as claimed in claim 1, wherein the at least one elastomeric cord (52) is cylindrical.

3. The lap joint as claimed in claim 1 or 2, wherein the at least one elastomeric cord (52) is a rubber.

4. The lap joint as claimed in any preceding claim, wherein the first and second faces of the permanently pliable sealant strip (42, 44) are preferably parallel.

5. The lap joint as claimed in any preceding claim, wherein the permanently pliable sealant strip (42, 44) includes a pair of elastomeric cords (52, 52') embedded therein, wherein the pair of elastomeric cords are located about a centre line of the permanently plastic or pliable sealant strip with a fastener (30) located between said pair of elastomeric cords.

6. A method of constructing a lap joint for providing a water-tight seal between two sheets of material (10, 20), the method comprising the steps of:
i) overlapping a first sheet (10) and a second sheet (20) of material, wherein the first and the second sheets of material overlap each other at adj acent edges of each sheet;
ii) placing a non-setting, permanently pliable sealant strip (42, 44) of width up to the width of material overlap of the first and second sheets on a first face of the first sheet so as to abut the first sheet and on a second face of the second sheet so as to abut the second sheet;
iii) placing a plurality of fasteners (30) through the first and second sheet in the region of overlap such that the fasteners penetrate the permanently pliable sealant strip and serve to compress, or hold compressed, the first and second sheets of material about the permanently pliable sealant strip;
wherein the permanently pliable sealant strip comprises along its length at least one elastomeric cord (52) embedded therein, wherein the at least one elastomeric cord is of the same thickness as the permanently pliable sealant strip and the at least one elastomeric cord is in direct contact with the first and second sheets of material respectively.

## Patentansprüche

1. Überlappungsverbindung zum Bereitstellen einer wasserdichten Abdichtung zwischen zwei Materialbahnen, wobei die Verbindung Folgendes umfasst:
i) eine erste Materialbahn (10) und eine zweite Materialbahn (20), wobei die erste und die zweite Materialbahn einander an benachbarten Rändern jeder Bahn überlappen;
ii) einen nicht aushärtenden, biegsamen Dichtungsstreifen mit einer Breite bis zur Breite der Materialüberlappung der ersten und der zweiten Bahn, wobei der dauerhaft biegsame Dichtungsstreifen (42, 44) mit einer ersten Fläche an der ersten Bahn anliegt und mit einer zweiten Fläche an der zweiten Bahn anliegt; wobei
iii) die Verbindung durch mehrere Befestigungsmittel (30) zusammengehalten wird, die derart in die erste und die zweite Materialbahn eindringen, dass die erste und die zweite Materialbahn um den dauerhaft biegsamen Dichtungsstreifen komprimiert oder komprimiert gehalten werden; wobei
iv) der dauerhaft biegsame Dichtungsstreifen (42, 44) über seine Länge mindestens einen Strang (52) umfasst, der darin eingebettet ist, und wobei der mindestens eine Strang die gleiche Dicke aufweist wie der dauerhaft biegsame Dichtungsstreifen und der mindestens eine Strang in direktem Kontakt mit der ersten beziehungsweise der zweiten Materialbahn steht;
**dadurch gekennzeichnet, dass** der mindestens eine Strang ein Elastomerstrang (52) ist.

2. Überlappungsverbindung nach Anspruch 1, wobei der mindestens eine Elastomerstrang (52) zylindrisch ist.

3. Überlappungsverbindung nach Anspruch 1 oder 2, wobei der mindestens eine Elastomerstrang (52) ein Kautschuk ist.

4. Überlappungsverbindung nach einem der vorhergehenden Ansprüche, wobei die erste und die zweite Fläche des dauerhaft biegsamen Dichtungsstreifens (42, 44) vorzugsweise parallel zueinander liegen.

5. Überlappungsverbindung nach einem der vorhergehenden Ansprüche, wobei der dauerhaft biegsame Dichtungsstreifen (42, 44) ein Paar Elastomerstränge (52, 52') beinhaltet, die darin eingebettet sind, wobei das Paar Elastomerstränge mittels eines Befestigungsmittels (30), das zwischen dem Paar Elastomerstränge angeordnet ist, um eine Mittellinie des dauerhaft biegsamen Dichtungsstreifens angeordnet sind.

6. Verfahren zum Erstellen einer Überlappungsverbindung zum Bereitstellen einer wasserdichten Abdichtung zwischen zwei Materialbahnen (10, 20), wobei das Verfahren folgende Schritte umfasst:
i) Überlappen einer ersten Materialbahn (10) und einer zweiten Materialbahn (20), wobei die erste und die zweite Materialbahn einander an benachbarten Rändern jeder Bahn überlappen;
ii) Anordnen eines nicht aushärtenden, dauerhaft biegsamen Dichtungsstreifens (42, 44), der eine Breite bis zur Breite der Materialüberlappung der ersten und der zweiten Bahn aufweist, auf einer ersten Fläche der ersten Bahn derart, dass er an der ersten Bahn anliegt, und auf einer zweiten Fläche der zweiten Bahn derart, dass er an der zweiten Bahn anliegt;
iii) Anordnen mehrerer Befestigungsmittel (30) durch die erste und die zweite Bahn hindurch im Bereich der Überlappung derart, dass die Befestigungsmittel den dauerhaft biegsamen Dichtungsstreifen durchdringen und dazu dienen, die erste und die zweite Materialbahn um den dauerhaft biegsamen Dichtungsstreifen zu komprimieren oder komprimiert zu halten;
wobei der dauerhaft biegsame Dichtungsstreifen über seine Länge mindestens einen Elastomerstrang (52) umfasst, der darin eingebettet ist, wobei der mindestens eine Elastomerstrang die gleiche Dicke aufweist wie der dauerhaft biegsame Dichtungsstreifen und der mindestens eine Elastomerstrang in direktem Kontakt mit der ersten beziehungsweise der zweiten Materialbahn steht.

## Revendications

1. Assemblage à recouvrement destiné à réaliser un joint étanche à l'eau entre deux feuilles de matériau, l'assemblage comportant :
i) une première feuille (10) et une deuxième feuille (20) de matériau, les première et deuxième feuilles de matériau se chevauchant au niveau de bords adjacents de chaque feuille ;
ii) une bande de mastic malléable non durcissant d'une largeur pouvant atteindre la largeur du chevauchement de matériau des première et deuxième feuilles, et la bande (42, 44) de mastic indéfiniment malléable s'appuyant sur la première feuille sur une première face et s'appuyant sur la deuxième feuille sur une deuxième face ;
iii) l'assemblage étant solidarisé par une pluralité d'éléments (30) de fixation qui traversent les première et deuxième feuilles de matériau de façon à comprimer, ou à maintenir comprimées, les première et deuxième feuilles de matériau de part et d'autre de la bande de mastic indéfiniment malléable,
iv) la bande (42, 44) de mastic indéfiniment malléable comportant sur sa longueur au moins un cordon (52) encastré dans celle-ci ; le ou les cordons étant de la même épaisseur que la bande de mastic indéfiniment malléable et le ou les cordons étant en contact direct respectivement avec les première et deuxième feuilles de matériau ; et **caractérisé en ce que** le ou les cordons étant un cordon (52) en élastomère.

2. Assemblage à recouvrement selon la revendication 1, le ou les cordons (52) en élastomère étant cylindriques.

3. Assemblage à recouvrement selon la revendication 1 ou 2, le ou les cordons (52) en élastomère étant en caoutchouc.

4. Assemblage à recouvrement selon l'une quelconque des revendications précédentes, les première et deuxième faces de la bande (42, 44) de mastic indéfiniment malléable étant de préférence parallèles.

5. Assemblage à recouvrement selon l'une quelconque des revendications précédentes, la bande (42, 44) de mastic indéfiniment malléable comprenant une paire de cordons (52, 52') en élastomère encastrés dans celle-ci, la paire de cordons en élastomère étant située de part et d'autre d'une ligne médiane de la bande de mastic indéfiniment malléable, un élément (30) de fixation étant situé entre ladite paire de cordons en élastomère.

6. Procédé de construction d'un assemblage à recouvrement destiné à réaliser un joint étanche à l'eau entre deux feuilles de matériau (10, 20), le procédé comportant les étapes consistant à :
i) faire se chevaucher une première feuille (10) et une deuxième feuille (20) de matériau, les première et deuxième feuilles de matériau se chevauchant au niveau de bords adjacents de chaque feuille ;
ii) placer une bande (42, 44) de mastic non durcissant indéfiniment malléable d'une largeur pouvant atteindre la largeur de chevauchement de matériau des première et deuxième feuilles sur une première face de la première feuille de façon à s'appuyer sur la première feuille et sur une deuxième face de la deuxième feuille de façon à s'appuyer sur la deuxième feuille ;
iii) placer une pluralité d'éléments (30) de fixation à travers les première et deuxième feuilles dans la région de chevauchement de telle sorte que les éléments de fixation traversent la bande de mastic indéfiniment malléable et servent à comprimer, ou à maintenir comprimées, les première et deuxième feuilles de matériau de part et d'autre de la bande de mastic indéfiniment malléable ;
la bande de mastic indéfiniment malléable comportant sur sa longueur au moins un cordon (52) en élastomère encastré dans celle-ci, le ou les cordons en élastomère étant de la même épaisseur que la bande de mastic indéfiniment malléable et le ou les cordons en élastomère étant en contact direct respectivement avec les première et deuxième feuilles de matériau.
